# EUROPÄISCHE PATENTSCHRIFT

(11) **EP 2 813 349 B1**
(45) Veröffentlichungstag und Bekanntmachung des Hinweises auf die Patenterteilung: **15.03.2017**
(21) Anmeldenummer: 14001942.3
(22) Anmeldetag: 04.06.2014
(51) Int. Cl.: B29C 65/34, B29C 65/58, B29C 65/72, B29C 65/48, B29C 65/50, B29C 65/16

(54) **ROHRVERBINDUNG FÜR THERMOPLASTISCHE KUNSTSTOFFROHRE**
PIPE JOINT FOR THERMOPLASTIC PLASTIC PIPES
RACCORD DE TUYAUTERIE POUR TUYAUX EN THERMOPLASTIQUE

(30) Priorität: 11.06.2013 DE 102013009687; 11.06.2013 DE 102013009689
(43) Veröffentlichungstag der Anmeldung: 17.12.2014
(73) Patentinhaber: Stang GmbH, 46562 Voerde (DE)
(72) Erfinder: Josten, Ulrich, 46562 Voerde (DE)
(74) Vertreter: Demski, Siegfried

(56) Entgegenhaltungen:
- EP-A1- 2 171 336
- EP-A2- 2 053 297
- WO-A1-03/076840
- DE-U1-020080 120 94U
- JP-A- H05 306 794
- JP-A- H06 281 078
- JP-A- H07 332 571

## Beschreibung

Die Erfindung betrifft eine Rohrverbindung für thermoplastische Kunststoffrohre, welche zumindest einenends eine Steckmuffe oder ein korrespondierendes Einsteckende aufweisen, wobei entweder die Steckmuffe oder das Einsteckende mit einem Aufheizelement ausgestattet ist, welches eine Schweißzone bildet.

Thermoplastische Kunststoffrohre werden zunehmend eingesetzt, um Leitungssysteme für den Transport verschiedener Medien zu schaffen. Der besondere Vorteil der thermoplastischen Kunststoffohre besteht hierbei darin, dass sie vielen negativen Einflüssen der Umwelt widerstehen und beständig gegenüber zahlreichen aggressiven Stoffen sind. Darüber hinaus zeichnen sich die Kunststoffrohre durch ein geringes Gewicht und Flexibilität beim Transport und der Verlegung aus.

Diese thermoplastischen Kunststoffrohre werden beispielsweise für Wasserversorgungsleitungen und Abwasserleitungen im Erdreich verlegt. Die Kunststoffrohre sind hierbei biegeweich und können somit einem Straßenverlauf ohne weiteres angepasst werden. Wenn auch die thermoplastischen Kunststoffrohre in großen Längen zur Verfügung gestellt werden, besteht immer wieder die Notwendigkeit, zwei Rohrenden miteinander zu verbinden. Hierzu ist einenends eine Steckmuffe und ein korrespondierendes Einsteckende an den Rohrenden ausgebildet, um diese zusammenzuführen. Vorzugsweise erfolgt eine Verschweißung der Kunststoffrohre mithilfe eines elektrischen Aufheizelementes durch Anlegen einer Spannung, wodurch die gewünschte Temperatur zur Verschmelzung der beiden Enden der Kunststoffrohre erreicht wird.

Bei der Verlegung von Kunststoffrohren bedient man sich häufig Muffen, deren Wandungen einen Heizdraht aufweisen. Diese Muffen werden Elektromuffe genannt. Es gibt sogenannte Überschiebemuffen und wandintegrierte Muffen. Bei wandintegrierten Muffen werden die Rohre mit einem Endabschnitt als Muffe und andererseits als Spitzende ausgebildet. Die Heizdrähte können sowohl auf dem Spitzende oder in der Muffe angeordnet werden. Bei der Verlegung können diese Kunststoffrohre ineinandergesteckt werden und mithilfe des in die Wandung eingelassenen Drahtes verschweißt werden. Dabei wird an den Enden des Heizdrahtes eine Spannung angelegt, sodass sich ein Stromfluss durch den Heizdraht einstellt, welcher diesen erhitzt. Bei Erreichen einer bestimmten Temperatur schmilzt zunächst das Wandungsmaterial des Endabschnittes, in dem der Heizdraht angeordnet ist. Anschließend beginnt das Wandungsmaterial der in den Endabschnitt gesteckten weiteren Versorgungsleitung zu schmelzen. Dadurch entsteht eine flächige und dichte Schweißnaht zwischen beiden Kunststoffrohren.

Ein Problem ist, dass es beim Schweißen eines Abwasserkanals immer wieder vorkommt, dass Wasser aus dem Kanal oder aus bereits angeschlossenen Hausanschlüssen in die Schweißverbindung läuft.

Aus dem Gebrauchsmuster DE 296 17 559 U1 ist eine Steckverbindung für Rohre bekannt, wobei die Rohrenden zusätzlich mit einer Dichtung bzw. mit zwei Dichtungen vor und hinter der Schweißzone ausgestattet werden, die beispielsweise in umlaufenden Nuten aufgenommen sind. Diese Dichtungen schützen den Schweißbereich vor eindringendem Wasser. Als nachteilig hat sich herausgestellt, dass beim Aufschieben der Rohrenden das Dichtungselement sehr leicht aus der vorhandenen Nut herausrutschen kann oder infolge der Verpressung herausgedrückt wird. Die Dichtigkeit einer solchen Nut ist damit nicht mehr gewährleistet.

Darüber hinaus ist aus dem Stand der Technik ein sogenannter Klickverschluss bekannt, der aus einer Nut und einer Feder besteht, die jeweils an den korrespondierenden Rohrenden ausgebildet sind und somit beim Ineinanderschieben der Kunststoffrohre zu einer einrastenden Verriegelung führen. Hierzu ist es erforderlich, dass die Rohrenden mit Druck zusammengepresst werden, bis der Klickverschluss verriegelt ist. Als nachteilig hat sich herausgestellt, dass große Andruckkräfte aufgebracht werden müssen, und zudem beispielsweise eine Verformung des Spitzendes erfolgen muss, um eine Verriegelung des Klickverschlusses zu ermöglichen.

Aus dem Gebrauchsmuster DE 20 2008 012 094 U1 und der WO 03/076840 A1 ist ein Übergangssattel mit einem umlaufenden Dichtungselement bekannt. Der Übergangssattel ist zur Anlage auf der Umfangsfläche eines Kunststoffrohres vorgesehen und wird mit der Umfangsfläche verschweißt.

Aus der EP 2 171 336 A1 ist eine Rohrverbindung mit einer Anschlussmuffe bekannt, die über eine auf das Rohrende aufgeschobene Dichtung abgedichtet wird, wobei die Anschlussmuffe mit dem Rohrende verschweißt wird. Aus der EP 2 053 297 A2 ist eine Muffe für verjüngte Rohrenden bekannt, die zum Verschweißen mit den Rohrenden vorgesehen ist.

Aus der JP H05 306794 A ist eine Muffe zum Verbinden von Rohrenden bekannt, die mit den Rohrenden verschweißt wird. Aus der JP H06 281078 A ist eine Muffe zum Verschweißen von spitzwinkligen Rohrenden bekannt und aus der JP H07 332571 A ist eine an einem Rohrende angeformte Muffe zum Verschweißen mit einem Einsteckende bekannt, welche keine besonderen Abdichtungsmaßnahmen aufweist.

Ausgehend von diesem Stand der Technik liegt der vorliegenden Erfindung die Aufgabe zugrunde, die Verbindung der thermoplastischen Kunststoffrohre zu erleichtern und die bekannten Nachteile zu beseitigen.

Erfindungsgemäß ist für eine Rohrverbindung von thermoplastischen Kunststoffrohren vorgesehen, dass zumindest auf einer Seite einer vorgesehenen Schweißzone ein an das Kunststoffrohr einstückig ausgebildetes Dichtungselement beabstandet zur Schweißzone angeformt ist, wobei das Dichtungselement an der Innenfläche der Steckmuffe oder der Außenfläche des Einsteckendes ausgebildet ist. Weitere Ausgestaltungen des Erfindungsgegenstandes sind aus den Unteransprüchen entnehmbar.

Durch das einstückig ausgebildete Dichtungselement, welches demzufolge aus dem Material der Kunststoffrohre besteht, werden zwei Probleme gelöst. Das Dichtungselement bewirkt die notwendige Abdichtung der beiden Rohrenden gegeneinander, wobei der besondere Vorteil dadurch gegeben ist, dass das Dichtungselement nicht wie bei dem Stand der Technik aus einer vorhandenen Nut herausgequetscht werden kann, sondern aufgrund der vorliegenden Einstückigkeit durch das eingeschobene Rohrende nicht verschiebbar ist. Soweit die Dichtungselemente in einer vorhandenen Nut des korrespondierenden Kunststoffrohrendes eingreifen, wird nicht nur die Abdichtung der beiden Rohrenden gewährleistet, sondern darüber hinaus eine feste Verbindung geschaffen, die dem eines Klickverschlusses gleicht. Somit wird durch die einstückig angeformten Dichtungselement der Rohrenden die Montage wesentlich erleichtert und gleichzeitig sichergestellt, dass kein Wasser, beispielsweise Abwasser oder Regenwasser, in die Schweißzone eindringen kann. Durch diese Maßnahme wird insbesondere sichergestellt, dass eine sichere Verschweißung erfolgen kann. Als besonderer Vorteil kommt hinzu, dass beim Zusammenfügen der beiden korrespondierenden Rohrenden die Fügekräfte wesentlich geringer sind als bei den herkömmlichen Rohren nach dem Stand der Technik, sodass die Montage demzufolge erleichtert wird.

Um eindringendes Wasser von der Rohrinnenseite und von der Rohraußenseite zu verhindern, ist vorgesehen, dass jeweils ein einstückig angeformtes Dichtungselement zu beiden Seiten der Schweißzone angeformt ist. Somit entsteht einerseits die Absicherung hinsichtlich der Dichtigkeit gegen eindringendes Wasser beim Schweißen, aber ebenso eine doppelte Klickverbindung.

Die erfindungsgemäßen Dichtungselemente können hierbei beispielsweise an der Innenfläche der Steckmuffe oder der Außenfläche des Einsteckendes ausgebildet sein. Beide Alternativen führen zu der gleichen vorteilhaften Ausgestaltung einerseits einer Dichtwirkung, ohne dass bei der Montage eine Verschiebung des Dichtungselementes eintreten kann, und andererseits einer Verrastung der beiden Enden der korrespondierenden Kunststoffrohre, sodass diese zur weiteren schweißtechnischen Verbindung bereits zueinander fixiert sind.

Um die Elastizität des Dichtungselementes im Bedarfsfall zu erhöhen und eine Verrastung im gewünschten Umfang zu gewährleisten, ist in weiterer Ausgestaltung der Erfindung vorgesehen, dass zu einer oder beiden Seiten des Dichtungselementes eine nutenförmige Vertiefung angeordnet ist. Die Vertiefung dient einerseits dazu, einen Teil des Dichtungselementes beim Zusammenschieben der Rohrenden aufzunehmen, aber es wird auch die Elastizität des Dichtungselementes insoweit erhöht, dass sich dieses formschlüssig und abdichtend um das korrespondierende Rohrende anlegen kann.

Zusätzlich kann vorgesehen sein, dass das Einsteckende oder die Steckmuffe zumindest auf einer Seite der Schweißzone eine Nut zur Aufnahme des Dichtungselementes aufweist, sodass die gewünschte Verriegelungswirkung eintritt, wobei insbesondere, wenn zu beiden Seiten der Schweißzone jeweils eine Nut und ein Dichtungselement ausgebildet ist, eine doppelte Sicherheit vorliegt. Die Nut kann hierbei mit der Nut zu einer Seite des Dichtungselementes identisch sein. Die Dichtungselemente sind hierbei seitlich versetzt zur Schweißzone angeformt, wobei durch die Nut vor und hinter dem Dichtungselement eine hohe Flexibilität erhalten wird, sodass die Dichtungselemente selbst beim Zusammenschieben nicht abscheren können.

In besonderer Ausgestaltung der Erfindung ist vorgesehen, dass das Dichtungselement aus einer Lippendichtung besteht, welche aus einem ringförmigen Wulst des Kunststoffrohres gebildet wird. Die Lippendichtung ermöglicht hierbei eine linienförmige Anlage an das korrespondierende Rohrende, um den nötigen Anpressdruck zu erzeugen und die Schweißzone vor eindringender Feuchtigkeit, insbesondere eindringenden Wasser von innen oder außen, zu schützen. Soweit die Lippendichtung aus einem ringförmigen Wulst des Kunststoffrohres gebildet ist, kann diese preiswert in die vorhandene Oberfläche mithilfe eines Formfräsers hergestellt werden.

In vorteilhafter Weise ist hierbei die Steckmuffe und das Einsteckende konisch verlaufend ausgebildet, wodurch der Hohlraum in der Schweißzone minimiert wird und sich ein schnellerer Schweißdruck innerhalb der Steckmuffe aufbauen kann. Des Weiteren haben konische Muffen den Vorteil, dass diese im verschweißten Zustand höheren Längskräften standhalten können, weil die Wanddicken in Längsrichtung größer sind, als bei wandintegrierten Muffen mit halbierter Wandstärke.

In weiterer besonderer Ausgestaltung der Erfindung ist vorgesehen, dass das Aufheizelement aus einer Drahtwicklung besteht, welche mit Spannung beaufschlagbar ist. Im einfachsten Fall kann die Drahtwicklung an der Außenfläche des Einsteckendes oder an der Innenfläche der Steckmuffe angeordnet sein, wobei die Drahtwicklung vorzugsweise nur im mittleren Bereich des Einsteckendes oder der Steckmuffe angeordnet ist. Die Enden der Drahtwicklung werden hierbei durch Öffnungen oder Durchbrüche nach außen oder innen geführt, und können somit mit Spannung beaufschlagt werden, sodass die Drahtwicklung zur Verschweißung der beiden Rohrenden verwendet werden kann. Die eingesetzte Drahtwicklung erstreckt sich hierbei über einen entsprechend dem Größenverhältnis der Kunststoffrohre ausgebildeten Endbereich, und zwar entweder der konischen Außenfläche des Einsteckendes oder der konischen Innenfläche der Steckmuffe. Durch die Erwärmung der Drahtwicklung wird insofern im Bereich der Schweißzone das thermoplastische Material der Kunststoffrohre soweit aufgeheizt, dass eine Verschmelzung beider Rohrenden in der Schweißzone möglich ist und damit neben der beschriebenen abdichtenden Maßnahme die Rohrenden auch fest miteinander verbunden werden können. Durch die oben genannten Maßnahmen wird eine lange Lebensdauer derartiger Kunststoffrohre gewährleistet, was im vorliegenden Fall von besonderer Bedeutung ist, da diese im Erdreich verlegt werden und für mehrere Jahrzehnte Haltbarkeit bestimmt sind.

Die thermoplastischen Kunststoffrohre können hierbei einenends eine Steckmuffe und anderenends ein Einsteckende aufweisen, es besteht aber auch die Möglichkeit, dass ein Rohrabschnitt der Kunststoffrohre zu beiden Enden mit einer Steckmuffe oder einem Einsteckende ausgestattet ist, um beispielsweise nachträgliche Rohrverbindungen bei Umbaumaßnahmen oder notwendige Änderungen vornehmen zu können. Mit kurzen Kunststoffrohren kann somit ein Übergang, beispielsweise zweier konischer Steckmuffen oder zweier konischer Einsteckenden, geschaffen werden.

In besonderer Ausgestaltung der Erfindung ist vorgesehen, dass ein Einsteckende auf der konischen Oberfläche mit zumindest einer Nut ausgestattet ist. Die Nut kann hierbei dreieckförmig ausgebildet sein und eine Anschlagfläche aufweisen, sodass nach Zusammenfügen der beiden Kunststoffrohre das Dichtungselement einerseits in der Nut einliegt und andererseits an der Anschlagfläche anliegt. Hierdurch wird erreicht, dass über das zumindest eine, vorzugsweise zwei Dichtungselemente und den hierzu korrespondierenden Nuten eine Verriegelung beider Rohrenden erfolgt, sodass diese nach dem Zusammenschieben nicht ohne größere Krafteinwirkung auseinander gezogen werden können. Ein weiterer Vorteil besteht dadurch, dass mithilfe der einstückig angeformten Dichtungslippen zugleich eine Abdichtung der beiden Rohrenden erfolgt und durch den Presssitz eine sichere Verschweißung erfolgen kann.

In weiterer Ausgestaltung der Erfindung ist vorgesehen, dass die Schweißzone oder der Bereich zwischen den Dichtungselementen über die Schweißzone einschließlich der Dichtungselemente mit einer entfernbaren Folie abgedeckt ist. Nach Entfernen der Folie kann die Verschweißung ohne zusätzliches Schälen oder aufwendiges Reinigen erfolgen. Mit der Folie kann der Kontaktbereich luftdicht und UV-beständig abgedeckt werden, sodass sich auf dem Kontaktbereich keine Verunreinigungen ablagern können und das Wandungsmaterial in diesem Oberflächenbereich nicht oxidiert. Wahlweise kann hierbei die Folie entweder auf die Innenfläche der Steckmuffe und/oder das Einsteckende der jeweiligen Rohrenden angeordnet werden. Vorzugsweise erfolgt die Abdeckung mithilfe der Folie auf dem Einsteckende, weil dieses durch Verunreinigungen wesentlich stärker belastet ist

In weiterer Ausgestaltung der Erfindung ist vorgesehen, dass die Folie aus einem Kunststoff oder einem Metall-Kunststoff-Verbund besteht. Eine Folie aus einem Kunststoffmaterial kann direkt auf eine Rohrleitung aus einem Kunststoff, wie Polyethylen, Polypropylen oder Polyamid aufgeschweißt werden. Die Kunststofffolien weisen den großen Vorteil auf, dass die thermische Energie, die zu ihrer Aufschmelzung erforderlich ist, vergleichsweise gering ist, sodass eine Verschweißung der Folie an einer Rohrleitung schnell mit geringem Energieverbrauch mit einfachen Gerätschaften, wie zum Beispiel einem Heizdraht, erfolgen kann. Alternativ besteht die Möglichkeit, eine Verschweißung mithilfe eines Lasers vorzunehmen, wobei dieser durch beispielsweise eine erste kunststoffdichte Abdeckung, welche lasertransparent ausgeführt ist, hindurchdringt und die dahinter befindliche Schicht mit der Rohrleitung verschweißen kann. Hierzu ist nur ein geringer Wärmeeintrag erforderlich, damit ein leichtes Anschmelzen der Kunststoffschichten erfolgt. Dieses Verschweißen kann rationell und vor allem kostengünstig durchgeführt werden und führt gleichzeitig zu einer dauerhaften, festen Verbindung, solange die Rohrleitungen vor Verunreinigungen geschützt werden müssen.

Die Folie kann hierbei so gestaltet sein, dass sie aus mehreren Schichten, vorzugsweise aus zwei Schichten, besteht, wobei eine Beschichtung einen geringeren Schmelzpunkt aufweist und diese Beschichtung der Schweißzone der Rohrleitung zugewandt ist. Bei dieser Ausgestaltung ist die Folie über die gesamte Fläche mehrschichtig ausgebildet, wobei die der Schweißzone zugewandte Schicht einen Schmelzpunkt aufweist, der geringer ist, als der Schmelzpunkt der übrigen Schichten. Eine solche Folie kann einfach großformatig hergestellt werden und muss bei Verwendung lediglich zurechtgeschnitten werden. Die Folie selbst kann aus Polyethylen, Polypropylen oder Polyamid bestehen, sodass diese unmittelbar mit der Rohrleitung verschweißt werden kann. Ebenso kommt ein Metall-Kunststoff-Verbund infrage, wobei in diesem Fall die Kunststofffolie wiederum mit der Rohrleitung verschweißt wird und die Metallschicht somit auf der Außenseite angeordnet ist.

Die vorliegende Erfindung zeichnet sich dadurch aus, dass mithilfe eines Dichtungselementes in Form einer einstückig angeformten Lippendichtung vier wesentliche Vorteile erzielt werden. Einerseits wird mithilfe des einstückig angeformten Dichtungselementes sichergestellt, dass beim Zusammenschieben der Rohrenden keine Verschiebung des Dichtungselementes eintritt, und damit eine mögliche Dichtungswirkung verhindert wird. Zum anderen kommt hinzu, dass das einstückig angeformte Dichtungselement in einer ausgebildeten Nut des korrespondierenden Rohrendes eingreifen kann, wodurch gleichzeitig eine Verriegelung stattfindet, sodass die beiden ineinander verpressten Rohrenden durch eine Art Klickverbindung in dieser Lage bei der eigentlichen Verschweißung gehalten werden. Zudem wird als drittes der Schweißbereich vor eindringendes Wasser geschützt. Viertens wird durch die spezielle Ausbildung der Dichtungs-und Fixierungs-Lippen der Kraftaufwand beim Zusammenfügen der Rohre minimiert. Mithilfe des Aufheizelementes in Form eines Heizdrahtes wird sodann der Kunststoffbereich im unmittelbaren Bereich des konischen Elementes insoweit aufgewärmt, dass eine Verschweißung beider Rohrenden erfolgt.

Die Erfindung wird anhand der Figuren nochmals erläutert.

Es zeigt
- Fig. 1: in einer geschnittenen Teilansicht eine erfindungsgemäß ausgebildete Steckmuffe mit Heizelement,
- Fig. 2: in einer geschnittenen Teilansicht ein Einsteckende,
- Fig. 3: in einer geschnittenen Teilansicht die Steckmuffe und das Einsteckende nach der Zusammenführung,
- Fig. 4: in einer vergrößerten geschnittenen Teilansicht eine Streckmuffe mit angeformtem Dichtungselement und
- Fig. 5: eine geschnittene Detailansicht des Einsteckendes mit Nut.

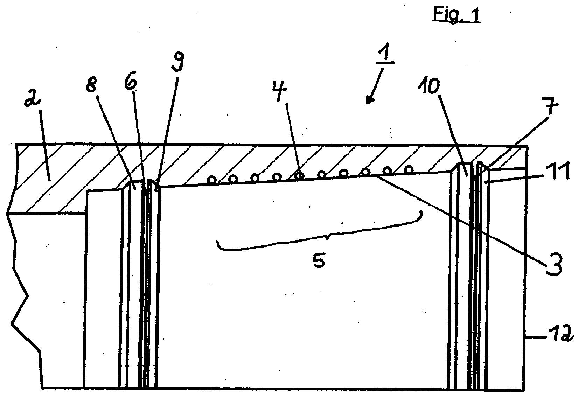

Figur 1 zeigt in einer geschnittenen Teilansicht eine Steckmuffe 1. Die Steckmuffe 1 ist endseitig an einem Kunststoffrohr 2 ausgebildet und besitzt eine innenliegende konische Ausdrehung 3, wobei im mittleren Bereich der konischen Ausdrehung 3 ein Heizelement 4 in Form eines Heizdrahtes angeordnet ist. Das Aufheizelement 4 ist hierbei umlaufend auf der konischen Innenfläche der Steckmuffe ausgebildet. Die Enden des Heizdrahtes werden über einen nicht dargestellten Durchbruch nach außen oder innen geführt und können somit mit Spannung beaufschlagt werden, sodass über das Aufheizelement 4 das Kunststoffmaterial des Kunststoffrohres 2 insoweit aufgeheizt wird, dass eine Verschmelzung mit dem Gegenstück, und zwar einem Einsteckende erfolgen kann. Das Aufheizelernent befindet sich hierbei in einer Schweißzone 5, die endseitig durch ein lippenförmiges Dichtungselement 6, 7 begrenzt ist. Das Dichtungselement 6, 7 ist einstückig an das Kunststoffrohr 2 angeformt bzw. wurde durch eine Ausdrehung des Kunststoffrohres 2 herausgearbeitet, wobei gleichzeitig zu beiden Dichtungselementen 6, 7 links- und rechtsseitig eine Nut 8, 9 bzw. 10, 11 ausgebildet ist. Durch die vorhandenen Ausdrehungen in Form der Nuten 8, 9 und 10, 11 wird die Elastizität des Dichtungselementes 6, 7 erhöht, sodass dieses beim Einschieben des korrespondierenden Einsteckendes leicht verformt werden kann und keine Gefahr eines Abreißens besteht. Das Dichtungselement 6, 7 liegt hierbei unmittelbar im konischen Bereich der Steckmuffe, wobei der konische Bereich bis über die beiden Dichtungselemente 6, 7 hinaus ausgebildet ist, beispielsweise bis zur Stirnfläche 12 des Kunststoffrohes 2 und bis zu einem Endabschnitt 13 im Inneren des Kunststoffrohres 2.

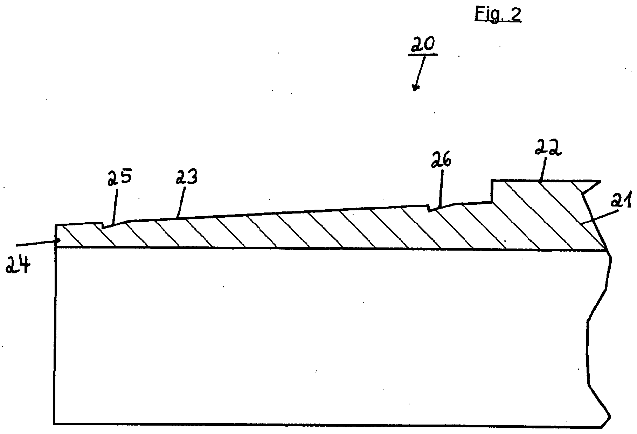

Figur 2 zeigt in einer geschnittenen Teilansicht ein Einsteckende 20, das an einem Kunststoffrohr 21 angeformt ist. Das Einsteckende 20 besitzt auf der Außenfläche 22 einen konischen Abschnitt 23, der von der vorderen Stirnfläche 24 ausgehend sich über einen größeren Teilbereich des Kunststoffrohres 21 erstreckt. In den konischen Abschnitt 23 sind zwei Nuten 25, 26 eingearbeitet, die zur Aufnahme der Dichtungselemente 6, 7 vorgesehen sind. Das Einsteckende 20 kann korrespondierend in die Steckmuffe 1 eingeschoben werden, wobei aufgrund der vorhandenen hohen Flexibilität der Dichtungselemente 6, 7 einerseits ein Abreißen der Dichtungselemente 6, 7 ausgeschlossen werden kann und darüber hinaus eine plastische Verformung eintritt, die eine Verriegelung mit den beiden Nuten 25, 26 des Einsteckendes 20 ermöglicht.

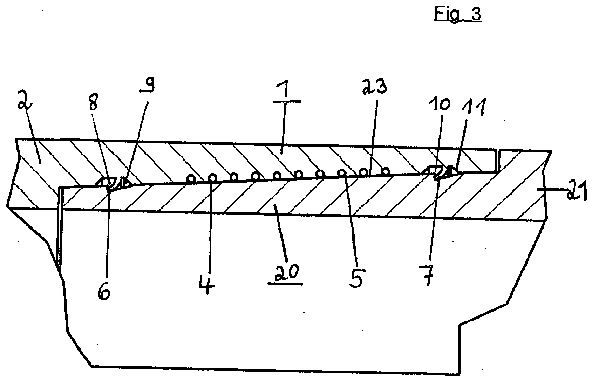

Figur 3 zeigt in einer geschnittenen Teilansicht zwei Kunststoffrohre 2, 21, wie sie aus den Figuren 1 und 2 mit ihrer Steckmuffe 1 bzw. Einsteckende 20 bekannt sind. Aufgrund des vorhandenen konischen Abschnittes 5 bzw. 23 liegen die beiden konischen Flächen ringförmig aufeinander und führen damit zu einer gleichbleibenden Wandstärke der beiden Kunststoffrohre 2, 21 im Schweißbereich. Mithilfe eines Aufheizelementes 4 erfolgt eine Verschweißung beider Rohrenden, wobei im gezeigten Ausführungsbeispiel das Aufheizelement 4 der Steckmuffe 1 zugeordnet ist. Alternativ besteht die Möglichkeit, das Aufheizelement 4 dem Einsteckende 20 zuzuordnen. Die Steckmuffe 1 besitzt zwei Dichtungselemente 6, 7 in Form einer Lippendichtung, die einstückig mit dem Kunststoffmaterial des Kunststoffrohres 2 verbunden sind. Aufgrund zweier links- und rechtsseitig angeordneter Nuten 8, 9 bzw. 10, 11 ist eine hohe Flexibilität des Dichtungselementes 6, 7 gewährleistet. Durch die vorhandenen Nuten 8, 9, 10, 11 entsteht eine Art Lippendichtung, die beim Einschieben des Einsteckendes 20 in die Steckmuffe 1 zu einer gewünschten Verformung führt, sodass die Dichtungselemente 6, 7 in den Nuten 25, 26 zu liegen kommen und damit eine Klickverbindung bieten, die ein Auseinandergleiten der beiden Kunststoffrohre 2, 21 verhindert.

Ein besonderer Vorteil besteht bei einer Ausführung der Dichtungselemente 6, 7 in der beschriebenen Form darin, dass aufgrund des thermoplastischen Kunststoffrohres eine hohe Elastizität besteht und die Dichtungselemente 6, 7 zur Seite hin verformt werden können, wodurch ein wesentlich geringerer Einpressdruck des Einsteckendes 20 gegenüber der Steckmuffe 1 erforderlich ist. Durch die Dichtungselemente 6, 7 wird im Weiteren ein Auseinandergleiten verhindert und es wird eine Abdichtung gegen eindringende Feuchtigkeit gewährleistet, um somit eine Verschmutzung der Schweißzone zu verhindern.

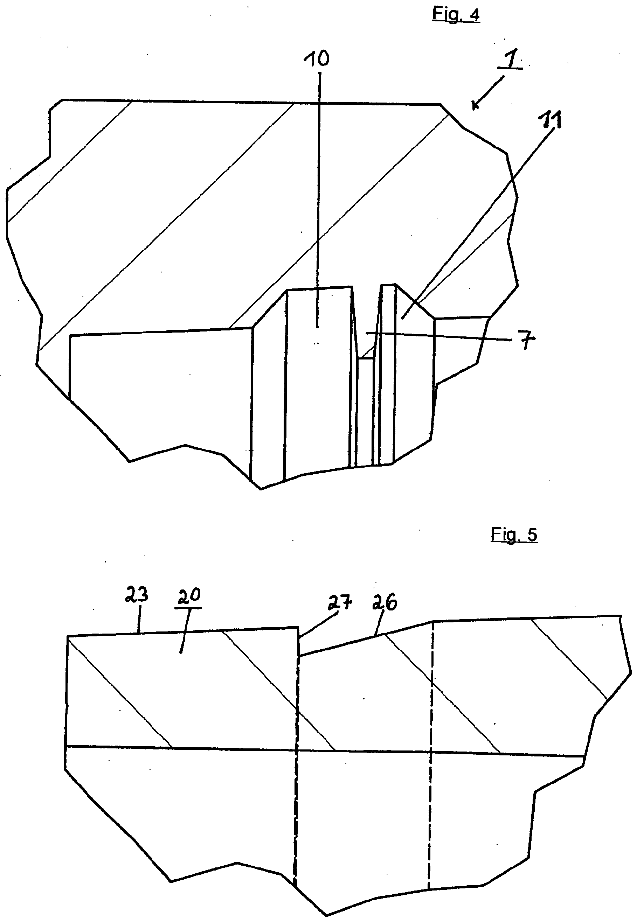

Figur 4 zeigt in einer vergrößerten Teilansicht die Steckmuffe 1 mit einem Dichtungselement 7, welches durch eine Nut 10,11 seitlich begrenzt ist, wobei aufgrund der Tiefe der Nut 10, 11 die Elastizität des Dichtungselementes 7 in Form einer Dichtungslippe gewährleistet wird.

Figur 5 zeigt in einer geschnittenen Teilansicht ein Einsteckende 20, welches auf der konischen Oberfläche 23 mit einer Nut 26 ausgestattet ist, wobei die Nut 26 im Verlauf dreieckförmig ausgebildet ist, sodass an einer Anschlagfläche 27 nach dem Zusammenfügen der beiden Kunststoffrohre 2, 21 das Dichtungselement 7 an der Anschlagfläche 27 anliegt. Hierdurch wird sichergestellt, dass ein Auseinandergleiten der beiden Kunststoffrohre 2, 21 vor dem Schweißvorgang verhindert wird.

### Bezugszeichenliste

- 1: Steckmuffe
- 2: Kunststoffrohr
- 3: Ausdrehung
- 4: Heizelement
- 5: Schweißzone
- 6: Dichtungselement
- 7: Dichtungselement
- 8: Nut
- 9: Nut
- 10: Nut
- 11: Nut
- 12: Stirnfläche
- 13: Endabschnitt
- 20: Einsteckende
- 21: Kunststoffrohr
- 22: Außenfläche
- 23: konischer Abschnitt
- 24: Stirnfläche
- 25: Nut
- 26: Nut
- 27: Anschlagfläche

## Patentansprüche

1. Rohrverbindung für thermoplastische Kunststoffrohre (2, 21), welche zumindest einenends eine Steckmuffe (1) oder ein korrespondierendes Einsteckende (20) aufweisen, wobei entweder die Steckmuffe (1) oder das Einsteckende (20) mit einem Aufheizelement (4) ausgestattet ist, welches eine Schweißzone (5) bildet,
**dadurch gekennzeichnet,**
**dass** zumindest auf einer Seite der Schweißzone (5) ein an das Kunststoffrohr (2, 21) einstückig ausgebildetes Dichtungselement (6, 7) beabstandet zur Schweißzone (5) angeformt ist, wobei das Dichtungselement (6, 7) an der Innenfläche der Steckmuffe (1) oder der Außenfläche (22) des Einsteckendes (20) ausgebildet ist.

2. Rohrverbindung nach Anspruch 1,
**dadurch gekennzeichnet,**
**dass** jeweils ein einstückig angeformtes Dichtungselement (6, 7) zu beiden Seiten der Schweißzone (5) angeformt ist.

3. Rohrverbindung nach Anspruch 1 oder 2,
**dadurch gekennzeichnet,**
**dass** zu einer oder beiden Seiten des Dichtungselementes (6, 7) eine Nut (8, 9, 10, 11) angeordnet ist.

4. Rohrverbindung nach einem der Ansprüche 1 bis 3,
**dadurch gekennzeichnet,**
**dass** das Einsteckende (20) oder die Steckmuffe (1) zumindest auf einer Seite der Schweißzone (5) eine Nut (8, 9, 10, 11, 25, 26) aufweist, und/oder dass jeweils eine Nut (8, 9, 10, 11) zu beiden Seiten der Schweißzone (5) angeordnet ist.

5. Rohrverbindung nach einem der Ansprüche 1 bis 4,
**dadurch gekennzeichnet,**
**dass** das Dichtungselement (6, 7) aus einer Lippendichtung besteht.

6. Rohrverbindung nach einem der Ansprüche 1 bis 5,
**dadurch gekennzeichnet,**
**dass** die Lippendichtung aus einem ringförmigen Wulst des Kunststoffrohres (2, 21) gebildet ist.

7. Rohrverbindung nach einem der Ansprüche 1 bis 6,
**dadurch gekennzeichnet,**
**dass** die Steckmuffe (1) und das Einsteckende (20) einen konischen Verlauf aufweisen.

8. Rohrverbindung nach einem der Ansprüche 1 bis 7,
**dadurch gekennzeichnet,**
**dass** das Einsteckende (20) auf der konischen Oberfläche (23) mindestens eine Nut (25, 26) zur Aufnahme des Dichtungselementes (6, 7) aufweist.

9. Rohrverbindung nach einem der Ansprüche 1 bis 8,
**dadurch gekennzeichnet,**
**dass** das Aufheizelement (4) aus einer Drahtwicklung besteht, welche mit Strom beaufschlagbar ist.

10. Rohrverbindung nach einem der Ansprüche 1 bis 9,
**dadurch gekennzeichnet,**
**dass** die Drahtwicklung auf der Außenfläche (22) des Einsteckendes (20) oder auf der Innenfläche der Steckmuffe (1) angeordnet ist.

11. Rohrverbindung nach einem oder mehreren der Ansprüche 1 bis 10,
**dadurch gekennzeichnet,**
**dass** die Drahtwicklung nur im mittleren Bereich des Einsteckendes (20) oder der Steckmuffe (1) angeordnet ist.

12. Rohrverbindung nach einem oder mehreren der Ansprüche 1 bis 11,
**dadurch gekennzeichnet,**
**dass** die Enden der Drahtwicklung durch Öffnungen oder Durchbrüche nach Außen oder innen geführt sind.

13. Rohrverbindung nach einem oder mehreren der Ansprüche 1 bis 12,
**dadurch gekennzeichnet,**
**dass** das Kunststoffrohr (2, 21) einenends eine Steckmuffe (1) und anderenends ein Einsteckende (20) aufweist, oder dass das Kunststoffrohr (2, 21) an beiden Enden eine Steckmuffe (1) oder ein Einsteckende (21) aufweist.

14. Rohrverbindung nach einem oder mehreren der Ansprüche 1 bis 13,
**dadurch gekennzeichnet,**
**dass** die Schweißzone (5) oder der Bereich zwischen den Dichtungselementen (6, 7) oder die Schweißzone (5) einschließlich der Dichtungselemente (6, 7) mit einer entfernbaren Folie abgedeckt ist.

15. Rohrverbindung nach einem oder mehreren der Ansprüche 1 bis 14,
**dadurch gekennzeichnet,**
**dass** die Folie aus einem Kunststoff oder einem Metall-Kunststoff-Verbund besteht.

## Claims

1. Pipe connection for thermoplastic plastic pipes (2, 21) which comprise at least on one side a muff joint (1) or a corresponding plug-in end (20), wherein either the muff joint (1) or the plug-in end (20) is equipped with a heating element (4) which forms a welding zone (5), **characterized in that** at least on one side of the welding zone (5), a sealing element (6, 7) integrally formed at the plastic pipe (2, 21) is formed spaced apart from the welding zone (5), the sealing element (6, 7) being formed at the inner surface of the muff joint (1) or the outer surface (22) of the plug-in end (20).

2. Pipe connection according to claim 1, **characterized in that** one integrally formed sealing element (6, 7) each is formed at both sides of the welding zone (5).

3. Pipe connection according to claim 1 or 2, **characterized in that** a groove (8, 9,10,11) is arranged at one or both sides of the sealing element (6, 7).

4. Pipe connection according to one of claims 1 to 3, **characterized in that** the plug-in end (20) or the muff joint (1) comprises a groove (8, 9, 10, 11, 25, 26) at least on one side of the welding zone (5), and/or one groove (8, 9, 10, 11) each is arranged at both sides of the welding zone (5).

5. Pipe connection according to one of claims 1 to 4, **characterized in that** the sealing element (6, 7) consists of a lip seal.

6. Pipe connection according to one of claims 1 to 5, **characterized in that** the lip seal is formed of an annular bead of the plastic pipe (2, 21).

7. Pipe connection according to one of claims 1 to 6, **characterized in that** the muff joint (1) and the plug-in end (20) extend conically.

8. Pipe connection according to one of claims 1 to 7, **characterized in that** the plug-in end (20) on the conical surface (23) comprises at least one groove (25, 26) for receiving the sealing element (6, 7).

9. Pipe connection according to one of claims 1 to 8, **characterized in that** the heating element (4) consists of a wire winding to which current may be applied.

10. Pipe connection according to one of claims 1 to 9, **characterized in that** the wire winding is arranged on the outer surface (22) of the plug-in end (20) or on the inner surface of the muff joint (1).

11. Pipe connection according to one or several ones of claims 1 to 10, **characterized in that** the wire winding is arranged only in the central region of the plug-in end (20) or the muff joint (1).

12. Pipe connection according to one or several ones of claims 1 to 11, **characterized in that** the ends of the wire winding are guided through openings or holes to the outside or inside.

13. Pipe connection according to one or several ones of claims 1 to 12, **characterized in that** the plastic pipe (2, 21) comprises on one side a muff joint (1) and on the other side a plug-in end (20), or that the plastic pipe (2, 21) comprises a muff joint (1) or a plug-in end (21) on both sides.

14. Pipe connection according to one or several ones of claims 1 to 13, **characterized in that** the welding zone (5) or the region between the sealing elements (6, 7) or the welding zone (5) including the sealing elements (6, 7) is covered with a removable foil.

15. Pipe connection according to one or several ones of claims 1 to 14, **characterized in that** the foil consists of a plastic or a metal-plastic compound.

## Revendications

1. Raccord de tuyauterie pour tuyaux en thermoplastique (2, 21), qui comportent au moins à une extrémité un embout femelle (1) ou un embout mâle (20) correspondant, soit l'embout femelle (1) soit l'embout mâle (20) étant équipé d'un élément chauffant (4), qui forme une zone de soudure (5),
**caractérisé en ce que**,
au moins d'un côté de la zone de soudure (5), un élément d'étanchéité (6, 7) réalisé d'un seul tenant sur le tuyau en plastique (2, 21) est formé espacé de la zone de soudure (5), l'élément d'étanchéité (6, 7) étant formé sur la surface intérieure de l'embout femelle (1) ou la surface extérieure (22) de l'embout mâle (20).

2. Raccord de tuyauterie selon la revendication 1,
**caractérisé en ce qu'**un élément d'étanchéité (6, 7) formé d'un seul tenant est formé respectivement des deux côtés de la zone de soudure (5).

3. Raccord de tuyauterie selon la revendication 1 ou 2,
**caractérisé en ce qu'**une rainure (8, 9, 10, 11) est disposée d'un ou des deux côtés de l'élément d'étanchéité (6, 7).

4. Raccord de tuyauterie selon l'une des revendications 1 à 3,
**caractérisé en ce que** l'embout mâle (20) ou l'embout femelle (1) comporte une rainure (8, 9, 10, 11, 25, 26) au moins d'un côté de la zone de soudure (5), et/ou **en ce qu'**une rainure (8, 9, 10, 11) est disposée respectivement des deux côtés de la zone de soudure (5).

5. Raccord de tuyauterie selon l'une des revendications 1 à 4,
**caractérisé en ce que** l'élément d'étanchéité (6, 7) se compose d'un joint à lèvre.

6. Raccord de tuyauterie selon l'une des revendications 1 à 5,
**caractérisé en ce que** le joint à lèvre est constitué d'un renflement annulaire du tuyau en plastique (2, 21).

7. Raccord de tuyauterie selon l'une des revendications 1 à 6,
**caractérisé en ce que** l'embout femelle (1) et l'embout mâle (20) sont de forme conique.

8. Raccord de tuyauterie selon l'une des revendications 1 à 7,
**caractérisé en ce que** l'embout mâle (20) comporte au moins une rainure (25, 26) sur la surface conique (23) pour recevoir l'élément d'étanchéité (6, 7).

9. Raccord de tuyauterie selon l'une des revendications 1 à 8,
**caractérisé en ce que** l'élément chauffant (4) se compose d'un fil enroulé, qui peut être soumis à l'action du courant.

10. Raccord de tuyauterie selon l'une des revendications 1 à 9,
**caractérisé en ce que** le fil enroulé est disposé sur la surface extérieure (22) de l'embout mâle (20) ou sur la surface intérieure de l'embout femelle (1).

11. Raccord de tuyauterie selon une ou plusieurs des revendications 1 à 10,
**caractérisé en ce que** le fil enroulé est disposé uniquement dans la zone médiane de l'embout mâle (20) ou de l'embout femelle (1).

12. Raccord de tuyauterie selon une ou plusieurs des revendications 1 à 11, **caractérisé en ce que** les extrémités du fil enroulé sont guidées vers l'extérieur ou vers l'intérieur par des ouvertures ou des passages.

13. Raccord de tuyauterie selon une ou plusieurs des revendications 1 à 12,
**caractérisé en ce que** le tuyau en plastique (2, 21) comporte à une extrémité un embout femelle (1) et à l'autre extrémité un embout mâle (20), ou **en ce que** le tuyau en plastique (2, 21) comporte aux deux extrémités un embout femelle (1) ou un embout mâle (**20**).

14. Raccord de tuyauterie selon une ou plusieurs des revendications 1 à 13,
**caractérisé en ce que** la zone de soudure (5) ou la zone entre les éléments d'étanchéité (6, 7) ou la zone de soudure (5) y compris les éléments d'étanchéité (6, 7) est recouverte d'un film amovible.

15. Raccord de tuyauterie selon une ou plusieurs des revendications 1 à 14,
**caractérisé en ce que** le film se compose de matière plastique ou d'un composite métal-plastique.
